# EUROPEAN PATENT APPLICATION

(11) **EP 2 659 787 A1**
(43) Date of publication of application: **06.11.2013**
(21) Application number: 12003457.4
(22) Date of filing: 04.05.2012
(51) Int. Cl.: A23K 1/18, A23K 1/16

(54) **Method of feeding a piglet or a calf**

(71) Applicant: BENEO-Orafti S.A., 4360 Oreye (BE)
(72) Inventor: The designation of the inventor has not yet been filed
(74) Representative: Koster, Nico

(57) **Abstract**

The invention relates to a method of feeding a piglet or a calf, comprising the step of providing a feed to the piglet or calf, whereby the feed contains at most 5 wt.% lactose and between 1 and 20 wt.% raw rice flour or raw rice starch, whereby the D₉₀ of the raw rice flour or raw rice starch is at most 500 µm.

## Description

The invention relates to a method of feeding a piglet or a calf, comprising the step of providing a feed to the piglet or calf.

Methods of providing a feed to piglets and calves are widely known and practiced. A typical feature of the known feeds is that they contain lactose, often in the form of whey. The purpose of adding lactose is to provide a source of carbohydrates to the piglet or calf which can be digested in an optimal fashion; lactose qualifies for this purpose since lactose is part of the mother milk, thus the piglet or calf is already routinely digesting lactose when it is weaned.

A disadvantage of the known feeds that rely on lactose is that lactose is a rather expensive ingredient.

It is the objective of the present invention to provide an alternative method of feeding a piglet or a calf, reducing the disadvantage of the known method.

The said objective is achieved in that the feed contains at most 5 wt.% lactose and between 1 and 20 wt.% raw rice flour or raw rice starch, whereby the D₉₀ of the raw rice flour or raw rice starch is at most 500 µm.

It is an advantage of the present invention that a feed can be provided to a piglet or calf that does not need to rely primarily on lactose as source of digestible carbohydrates. It is a further advantage of the present invention that a negative impact on the growth rate or feed conversion as a result of the reduction or elimination of lactose may be reduced or even avoided.

The method of the invention relates to a method of feeding a piglet or a calf. One major difference between mature pigs and cattle is that cattle are ruminants whereas pigs are not. However, for very young animals this situation is different, primarily in the sense that calves are not yet ruminating or not yet fully ruminating; thus, the digestive systems of piglets and calves are significantly closer to each other than those of pigs and cattle.

The feed to be provided according to the invention to the piglet or calf should contain at most 5 wt.% (on total weight of the feed) lactose. Lactose may be provided as such, or it may be provided in the form of a lactose-containing composition such as for example whey. Preferably, the feed contains at most 4, 3, 2, or even at most 1 wt.% lactose. Most preferably, the feed contains according to the invention essentially no lactose.

As used herein, the terms 'essentially', 'consist(ing) essentially of or 'essentially all' and equivalents have, unless noted otherwise, in relation to a composition or a process the usual meaning that deviations in the composition or process may occur, but only to such an extent that the essential characteristics and effects of the composition or process are not materially affected by such deviations.

The feed to be provided according to the invention to the piglet or calf should contain between 1 and 20 wt.% raw rice flour or raw rice starch. As meant herein, the term 'raw' refers to the condition of starch, whether it be as such or as part of flour. In particular, the term raw refers to starch that is uncooked, also referred to as a 'cook-up' starch. As the person skilled in the art knows, unmodified raw starch granules show, when viewed with a microscope under polarized light, a Maltese cross effect. This is in contrast to starches that are not raw starches; these are in particular starches - as such or included in flour - that have been treated or modified with the purpose of displaying solubility or gelatinisation effects in aqueous systems already at low temperatures, i.e. temperatures below the original gel point of the raw starch; such starches are often referred to as pregelatinised or cold-soluble starches. Raw rice flour and raw rice starch are as such known.

According to the invention, the amount of raw rice flour or raw rice starch in the feed should be at least 1 wt.% (on the total of the feed). This has the advantage that the benefits of the invention can be clearly noticeable. More preferably, the amount of raw rice flour or raw rice starch in the feed is at least 2, 3, 4, 5, 6, 7, 8, 9, or 10 wt.%. According to the invention, the amount of raw rice flour or raw rice starch is at most 20 wt.%, preferably at most 19, 18, 17, 16, 15, 14, 13, or 12 wt.%.

The raw rice flour or raw rice starch has according to the invention a D₉₀ of at most 500 µm. As is known, the expression that a collection of particles has a 'D_{α} of β' means that α wt.% of all particles in the collection has a size of at most β. The particle size determination as meant herein is done via sieving.

Without wishing to be bound to theory, it is suspected that on the one hand the choice of small particles - significantly smaller, for example, than rice grains or even broken rice grains - in combination with the small size of typically 2 to 8 µm of individual starch granules in the flour or starch particles causes an enhanced availability of the rice starch in the digestive tract of the piglet or calf. It is then contemplated that on the other hand, the raw nature of the starch in the raw rice flour or raw rice starch may prevent an overly rapid digestion, and thus an overly rapid systemic availability of glucose, by the piglet or calf. The invention thus may strike a favourable balance between speed of digestion and speed of availability of glucose, thereby enabling the raw rice flour or raw rice starch to take on the role of lactose.

Preferably, the D₉₀ of the raw rice flour or raw rice starch in the invention is at most 450 µm, more preferably at most 400, 350, 300, or even at most 250 µm. The D₉₀ of the raw rice flour or raw rice starch is preferably at least 25, 40, 50, 60, 70, 80, 90, or 100 µm.

The raw rice flour or raw rice starch to be used in the method of the present invention may be prepared from a wide range of rice varieties, including but not limited to Indica and Japonica varieties. In one preferred embodiment, a rice variety is chosen of which the starch has a high amylose content, of preferably at least 10%, more preferably at least 12, 14, 16, 18, or even at least 20%; preferably the amylose content is at most 25 or 30%.

In order to benefit from the method of the invention, it is preferred that at least one third of the feed as provided to a piglet or a calf over a 24-hour period is provided according to the method of the invention; more preferably, at least one half, two thirds, three quarters, or even essentially all of the feed as provided to a piglet or a calf over a 24-hour period is provided according the method of the invention. In a preferred embodiment, the aforementioned providing of the feed according to the invention over a 24-hour period is done during at least 5 days, which may be consecutive or not, between the moment of weaning and 100 days thereafter. In one embodiment, the aforementioned providing of the feed according to the invention over a 24-hour period is done during at least 10, 15, 20, 25, 30, 35, 40, 45, 50, 55, 60, 65, 70, or even 75 or 80 days, which may be consecutive or not, between the moment of weaning and 100 days thereafter. In another embodiment, the aforementioned providing of the feed according to the invention over a 24-hour period is done during at least 5, 10, or 15 days of the first 20 days after weaning.

The feed that is provided to a piglet or a calf during about the first 20 days after weaning is herein referred to as a prestarter feed. It is quite customary for known prestarter feeds to contain a rather high amount of lactose of for example 7 to 10%. In one embodiment of the method of the invention, therefore, the feed is a prestarter feed.

The feed that is provided to a piglet or a calf during a period of about 20 days after the prestarter feed is herein referred to as a starter feed. It is quite customary for known starter feeds to contain a significant amount of lactose of for example 3 to 5%. In one embodiment of the method of the invention, therefore, the feed is a starter feed.

The invention will be illustrated by means of the following Example, without being limited thereto.

### Example 1; Comparative Experiment A

A trial was conducted with 138 cross-bred piglets, half boars and half sows. The piglets were 21 days old at the start of the trial. The piglets were divided over pens, with 8 to 10 piglets per pen. The piglets were weighed the day before the start of the trial, at age 42 days (thus 21 days into the trial), and at age 67 days (thus 46 days into the trial). The piglets were divided into two groups: a control group and a test group. To the control group (Comparative Experiment A) a standard sequence of a prestarter feed (from age 21 days to age 42 days) and a starter feed (from age 43 days to age 67 days) was provided, both of which contained whey powder. To the test group of Example 1, a sequence of a prestarter feed (from age 21 days to age 42 days) and a starter feed (from age 43 days to age 67 days) according to the invention was provided, wherein the whey powder was fully exchanged with raw rice flour (RemyFlo^{™} R 200; supplier Beneo Remy) having a D₉₀ of 200 µm.

**Table 1 - Compositions piglet diets**

| Experiment / Example | A | A | 1 | 1 |
|---|---|---|---|---|
| Type | Prestart | Starter | Prestart | Starter |
| | | | | |
| Wheat | 200.00 | 200.00 | 200.00 | 200.00 |
| Corn | 239.70 | 248.10 | 220.15 | 239.40 |
| Barley | 200.00 | 200.00 | 200.00 | 200.00 |
| Soybean meal Hipro | 30.00 | 175.00 | 30.00 | 180.00 |
| Potato protein | 31.00 | - | 31.00 | - |
| Soycomil P(soy protein concentrate) | 50.00 | - | 59.00 | - |
| Fullfat toasted soy beans | 60.00 | 50.00 | 60.00 | 50.00 |
| Sunflower meal | 30.00 | 40.00 | 30.00 | 40.00 |
| Whey powder 'sweet' | 100.00 | 30.00 | - | - |
| RemyFlo R 200 | - | - | 100.00 | 30.00 |
| Soya oil | 25.00 | 21.00 | 30.00 | 23.00 |
| Premix piglets low Cu | 5.00 | 5.00 | 5.00 | 5.00 |
| Limestone | 9.50 | 10.50 | 10.00 | 10.50 |
| Monocalciumphosphate | 9.50 | 8.50 | 12.00 | 9.50 |
| Natuphos 5000G | 0.10 | 0.10 | 0.10 | 0.10 |
| Salt | 4.50 | 5.50 | 6.40 | 6.00 |
| L-lysine HCl | 3.50 | 3.80 | 3.85 | 3.90 |
| DL-methionine | 1.30 | 1.30 | 1.30 | 1.30 |
| L-threonine | 0.60 | 1.00 | 0.85 | 1.10 |
| L-Tryptophan | 0.30 | 0.20 | 0.35 | 0.20 |

The amounts of the ingredients in Table 1 are given in parts per thousand (‰), weight/weight.

The two prestarter diets were iso-energetic and iso-proteic. Similarly, the two starter diets were iso-energetic and iso-proteic too.

In Tables 2 and 3, the results of the trial are given, expressed in the weight gain of the piglets (Table 2) and in their feed intake (Table 3).

**Table 2 - Average daily weight gain**

| | A | 1 |
|---|---|---|
| Average weight gain from day 21 to day 42 (kg/day) | 0.108 | 0.120 |
| Average weight gain from day 43 to day 67 (kg/day) | 0.415 | 0.404 |
| Average weight gain overall (kg/day) | 0.272 | 0.272 |

**Table 3 - Average daily feed intake**

| | A | 1 |
|---|---|---|
| Average feed intake from day 21 to day 42 (kg/day) | 0.228 | 0.236 |
| Average feed intake from day 43 to day 67 (kg/day) | 0.691 | 0.666 |
| Average feed intake overall (kg/day) | 0.475 | 0.475 |

As is clear from the results, the piglets of Example 1 were fully comparable in feed intake and weight gain to the piglets of Comparative Experiment A, showing that raw rice flour of certain particle sizes according to the invention is capable of replacing lactose.

## Claims

1. Method of feeding a piglet or a calf, comprising the step of providing a feed to the piglet or calf, whereby the feed contains at most 5 wt.% lactose and between 1 and 20 wt.% raw rice flour or raw rice starch, whereby the D₉₀ of the raw rice flour or raw rice starch is at most 500 µm.

2. Method according to claim 1, wherein the feed contains at most 1 wt.% lactose.

3. Method according to any one of claim 1 or 2 , wherein the feed contains between 3 and 15 wt.% raw rice flour or raw rice starch.

4. Method according to any one of claims 1 - 3, wherein the starch in the raw rice flour or raw rice starch contains at least 10 wt.% amylose.

5. Method according to any one of claims 1 - 4, wherein the feed as provided to the piglet or calf according to any one of claims 1 - 4 constitutes at least one third of the total amount of feed as provided to the piglet or a calf over a 24-hour period.

6. Method according to claim 5, wherein the providing of the feed according to any one of claims 1 - 4 over a 24-hour period is done during at least 5 days, which may be consecutive or not, between the moment of weaning and 100 days thereafter.

7. Method according to , wherein the feed is a prestarter feed or a starter feed.
